# FASCICULE DE BREVET EUROPEEN

(11) **EP 2 475 899 B1**
(45) Date de publication et mention de la délivrance du brevet: **17.08.2016**
(21) Numéro de dépôt: 10762861.2
(22) Date de dépôt: 13.09.2010
(51) Int. Cl.: F16C 7/00

(54) **PROCEDE DE FABRICATION D'UNE BIELLE METALLIQUE RENFOCEE PAR DES FIBRES, ET BIELLE AINSI OBTENUE**
VERFARHEN ZUR HERSTELLUNG VON EINER FASERVERSTÄRKTEN, METALLISCHEN PLEUELSTANGE UND SO HERSGESTELLTE PLEUELSTANGE
MANUFACTURING PROCESS OF A FIBRE REINFORCED METALLIC CONNECTING ROD AND THUS OBTAINED CONNECTED ROD

(30) Priorité: 11.09.2009 FR 0904369
(43) Date de publication de la demande: 18.07.2012
(73) Titulaire: Messier-Bugatti-Dowty, 78140 Vélizy-Villacoublay (FR)
(72) Inventeur: MASSON, Richard, F - 78350 Les Loges en Josas (FR); DUNLEAVY, Patrick, F-91120 Palaiseau (FR); FRANCHET, Jean-Michel, F-75018 Paris (FR); KLEIN, Gilles, F-95540 Mery sur Oise (FR)
(74) Mandataire: Parzy, Benjamin Alain
(86) Numéro de dépôt international: PCT/EP2010/005594
(87) Numéro de publication internationale: WO 2011/029620

(56) Documents cités:
- WO-A2-2010/001068
- WO-A2-2010/001069
- FR-A1- 2 925 896
- FR-A1- 2 925 897

## Description

La présente invention concerne un procédé d'obtention d'une bielle composite composée d'une matrice métallique renforcée par des fibres, notamment des fibres en céramique, et une bielle ainsi obtenue.

### ARRIERE PLAN DE L'INVENTION

On connaît des bielles composites comportant une matrice en métal ou alliage métallique, notamment en alliage de titane, matrice qui est renforcée par un renfort fibreux comportant des fibres en céramique gainées du même métal que celui de la matrice.

Il est ainsi connu de la demande de brevet WO2009/034264 un procédé de fabrication de ce type de bielle. Selon ce procédé, on fabrique tout d'abord des renforts fibreux dans lesquels les fibres s'étendent parallèlement les unes aux autres, et sont solidarisées entre elles. Puis ces renforts sont disposés dans des rainures longitudinales d'une ébauche métallique destinée à constituer la bielle, les rainures définissant des logements d'extension finie recevant les renforts fibreux. L'ensemble subit une compression isostatique à chaud ayant pour effet de solidariser intimement les fibres au métal de l'ébauche. Il reste alors à usiner l'ébauche pour obtenir la bielle finie.

### OBJET DE L'INVENTION

La présente invention a pour objet de proposer un procédé de fabrication d'une bielle composite simplifiée par rapport aux solutions existantes.

### RESUME DE L'INVENTION

A cet effet, la présente invention est relative à un procédé de fabrication d'une bielle métallique renforcée longitudinalement dans son épaisseur par un renfort fibreux, procédé comportant les étapes suivantes :
- réalisation d'une ébauche métallique comportant au moins un logement longitudinal débouchant sur un chant de l'ébauche ;
- insertion d'un renfort fibreux dans le logement ;
- liaison du renfort fibreux à l'ébauche par diffusion métallique autour des fibres du renfort fibreux ;
- finition de l'ébauche pour obtenir une bielle.

Selon l'invention, l'insertion du renfort fibreux comprend les opérations suivantes :
- disposition préalable du renfort fibreux sur un support en forme de cornière ;
- insertion de la cornière munie du renfort fibreux correspondant dans le logement.

Ainsi, le renfort fibreux peut s'étendre longitudinalement sur toute la longueur de l'ébauche, ce qui simplifie sa mise en place dans le logement. La disposition préalable du renfort fibreux sur le support en cornière facilite sa mise en place dans le logement. Bien entendu, le support sera réalisé dans le même métal que celui de l'ébauche. Qui plus est, le logement peut être obtenu par filage de l'ébauche, ou par un usinage longitudinal sans plongée, ce qui facilite la réalisation de l'ébauche.

Ce procédé donne naissance à des bielles dont les renforts fibreux, qui s'étendent sur toute la longueur de la bielle, débouchent sur un chant des bielles. Cette particularité ne modifie pas substantiellement les propriétés mécaniques de la bielle. Suivant l'environnement prévu pour la bielle, il conviendra le cas échéant de protéger les chants des extrémités longitudinales des bielles avec un revêtement ou une peinture ad hoc.

En outre, la partie du renfort fibreux qui est éliminée lors de la finition de la bielle peut servir d'éprouvette d'épreuve, pouvant être inspectée et/ou testée après fabrication de la bielle, ce qui n'est pas possible avec un renfort complètement contenu dans un logement non débouchant.

L'invention est également relative au procédé suivant :
- réalisation d'un profilé métallique de section constante comprenant au moins deux logements longitudinaux ;
- insertion d'un renfort fibreux dans les logements, l'insertion du renfort fibreux comprenant la disposition préalable des renforts fibreux sur des supports en forme de cornière et l'insertion de chaque cornière munie du renfort fibreux correspondant dans l'un des logements ;
- compression isostatique à chaud de l'ensemble pour obtenir un barreau renforcé ;
- débit du barreau renforcé pour constituer une pluralité d'ébauches de bielles ;
- finition de chaque ébauche pour obtenir des bielles renforcées.

Le procédé de l'invention permet ainsi de simplifier considérablement la fabrication de la bielle composite. A la différence du procédé décrit dans le document WO2009/034264-A2 précité, la bielle peut ici être obtenue avec un nombre total d'étapes de fabrication plus réduit. Avec le procédé selon l'invention, les bielles ne sont plus fabriquées une à une, mais en série à partir d'un barreau renforcé. En particulier, il n'y a plus qu'une seule étape d'insertion des renforts fibreux et qu'une seule étape de diffusion métallique pour l'ensemble des bielles obtenues.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente en éclaté le barreau métallique renforcé à partir duquel des bielles selon l'invention sont obtenues ;
- la figure 2 représente une section transversale du barreau métallique renforcé selon la figure 1 ;
- la figure 3 représente le barreau métallique renforcé de la figure 1 en perspective et en transparence;
- la figure 4 représente une vue de dessus de l'assemblage du barreau métallique renforcé de la figure 1 avec la représentation des lignes de découpe des bielles ;
- la figure 5 représente une vue de dessus transparente d'une bielle obtenue après découpe du barreau métallique renforcé selon les lignes de découpe indiquées à la figure 4.
- La figure 6 est une vue de face et de dessus d'une bielle selon l'invention.

L'ensemble des figures est très schématique et ne respecte pas nécessairement l'échelle entre les différents composants représentés afin d'en faciliter la lecture, chaque élément représenté conservant la même référence dans l'ensemble des figures.

### DESCRIPTION DETAILLEE DE L'INVENTION

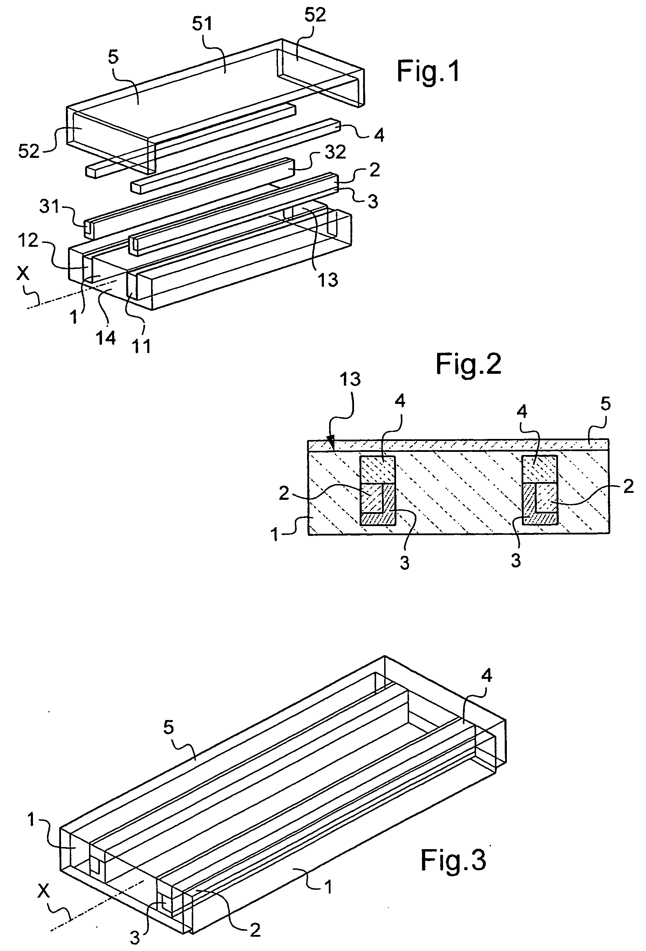

Le procédé selon l'invention comprend la séquence d'étapes suivantes :
Tout d'abord, et comme illustré aux figures 1 à 3, on réalise un profilé métallique 1, ici par filage d'un alliage de titane. Le profilé 1 s'étend selon un axe de symétrie longitudinal X et présente une section constante. Le profilé 1 possède deux logements traversants 11, 12 disposés symétriquement de part et d'autre de l'axe X. Les logements ont ici la forme de rainures de section transversale carrée ou rectangulaire.

Par ailleurs, on prépare deux renforts fibreux 2. Les renforts fibreux 2 peuvent notamment être obtenus par le procédé décrit dans le brevet WO2009/034264 précité, et comportent ici de fibres de céramique gainées de métal, ici des fibres de carbure de silicium gainées du même alliage métallique que celui du profilé 1. Les renforts fibreux 2 sont chacun disposés sur deux supports en forme de cornière 3 définissant un fond 31 et une paroi latérale 32. Les fibres s'étendent selon une direction longitudinale, parallèlement les uns aux autres.

Ensuite, on insère les cornières 3 munies du renfort fibreux 2 dans les logements 11, 12 du profilé 1. Pour ce faire, le dimensionnement des cornières 3 est adapté pour leur permettre de se poser dans le fond des logements 11, 12 en recouvrant substantiellement toute la surface du fond des logements 11, 12.

Une fois les cornières 3 insérées au fond des logements 11, 12, il reste un espace vacant dans les logements 11, 12 au dessus des cornières 3, que l'on comble en insérant dans les logements 11, 12 des blocs de remplissage 4 faits du même alliage que celui du profilé 1 et des cornières 3. Les faces supérieures des blocs de remplissage 4 viennent affleurer à la face supérieure 13 du profilé 1.

Ensuite, on vient disposer sur la face supérieure 13 du profilé 1 un couvercle mince 5 métallique, réalisée ici dans une feuille de métal, et qui comprend une paroi supérieure 51 et deux parois latérales 52. Son dimensionnement est adapté pour que sa paroi supérieure 51 recouvre entièrement la face supérieure 13 du profilé 1, et que ses parois latérales 52 recouvrent entièrement les chants des extrémités 14 du profilé 1. Le couvercle 5 est soudé au profilé, de façon à fermer l'ensemble et encapsuler les renforts fibreux 2.

On met sous vide l'ensemble profilé/renforts fibreux/blocs de remplissage, puis on effectue une compression isostatique à chaud de l'ensemble, ce qui provoque une diffusion du métal atour des fibres.

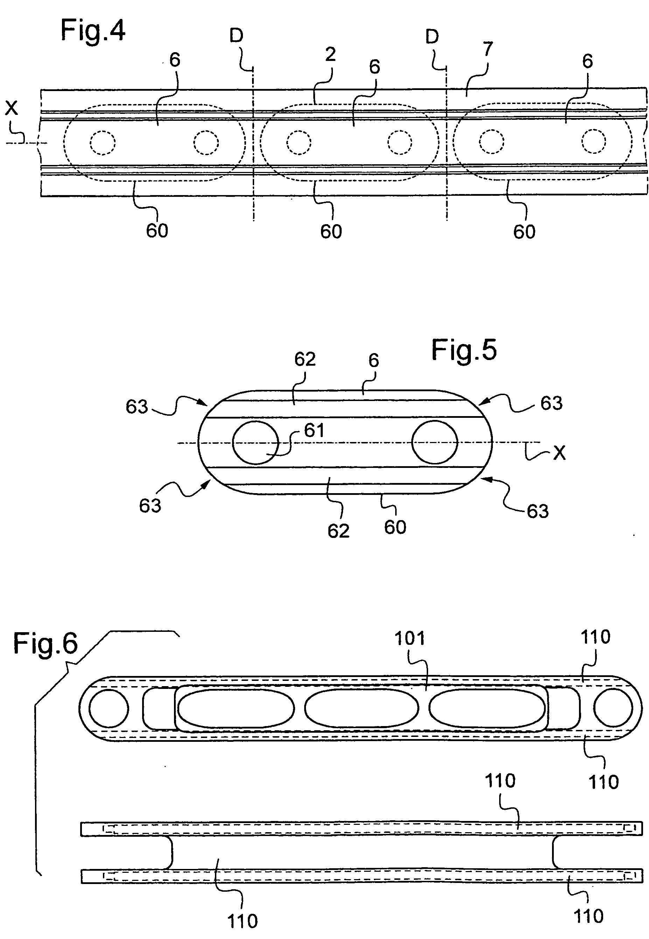

On obtient alors un barreau renforcé 7 composé d'une matrice métallique en alliage de titane renforcée par des fibres de carbure s'étendant dans deux zones longitudinales correspondant substantiellement aux zones des logements 11, 12 initiaux, comme représenté à la figure 4.

Il reste ensuite à débiter le barreau renforcé 7, par exemple selon des lignes de découpe D représentées à la figure 4, de façon à obtenir une pluralité d'ébauches de bielles 6. Puis ces ébauches sont usinées pour obtenir les bielles. Cet usinage comprend le détourage des bielles selon les profils 60 et le perçage d'orifices 61 à chacune de leurs extrémités, comme illustré à la figure 5, les perçages s'étendant ici entre les deux zones longitudinales renforcées. Sur cette figure, on constate que les fibres débouchent sur des zones 63 du chant de la bielle.

La bielle pourra alors être munie de bagues, et recevoir un revêtement de protection, notamment destinée à protéger le chant de la bielle.

La figure 6 illustre la mise en oeuvre de l'invention sur une bielle 101 qui est pourvue de quatre renforts fibreux selon l'invention.

L'invention n'est pas limitée au mode de réalisation qui vient d'être décrit, mais englobe au contraire toute variante reprenant, avec des moyens équivalents, les caractéristiques essentielles énoncées plus haut.

Par ailleurs, le terme de profilé métallique utilisé dans le cadre de l'invention ne cantonne pas l'obtention de ce produit à un procédé de filage à travers une filière de forme appropriée: bien que le filage soit un procédé particulièrement adapté pour ce type de produit, il est possible d'obtenir un tel produit par d'autres procédés connus dans le domaine de la métallurgie.

Enfin, bien que le renfort fibreux décrit ici est constitué de fibres de céramique gainées de métal, ce type de renfort pouvant notamment être obtenu selon l'enseignement du brevet WO 2009/034264, l'invention englobe également des bielles comportant d'autres types de renfort fibreux, et notamment à des renforts fibreux sous forme de fibres céramiques directement insérées dans les logements du profilé.

Bien que dans l'exemple illustré, il est prévu d'insérer des blocs métalliques dans les rainures afin de remplir l'espace vacant laissé au dessus du renfort fibreux une fois celui-ci inséré dans les logements, on pourra également faire en sorte que le renfort fibreux remplisse entièrement les logements ménagés dans le profilé.

Enfin, bien que la réalisation d'un barreau d'une longueur suffisante pour pouvoir être débité est intéressante d'un point de vue industriel, on pourra bien sûr appliquer l'invention à une ébauche unitaire destinée à recevoir les renforts fibreux, puis être finie.

## Revendications

1. Procédé de fabrication d'une bielle métallique (6) renforcée longitudinalement dans son épaisseur par un renfort fibreux (2), procédé comportant les étapes suivantes :
- réalisation d'une ébauche métallique comportant au moins un logement longitudinal (11, 12) débouchant sur un chant de l'ébauche ;
- insertion d'un renfort fibreux (2) dans le logement ;
- liaison du renfort fibreux à l'ébauche par diffusion métallique autour des fibres du renfort fibreux (2) ;
- finition de l'ébauche pour obtenir une bielle (6) ;
**caractérisé en ce que** l'insertion du renfort fibreux comprend les opérations suivantes :
- disposition préalable du renfort fibreux sur un support en forme de cornière ;
- insertion de la cornière munie du renfort fibreux correspondant dans le logement.

2. Procédé de fabrication d'une bielle métallique (6) renforcée longitudinalement dans son épaisseur par un renfort fibreux (2) s'étendant parallèlement à une direction longitudinale de la bielle, le procédé comportant les étapes suivantes :
- réalisation d'un profilé métallique (1) de section constante comprenant au moins deux logements longitudinaux (11, 12) ;
- insertion d'un renfort fibreux (2) dans les logements, l'insertion du renfort fibreux comprenant la disposition préalable des renforts fibreux sur des supports en forme de cornière et l'insertion de chaque cornière munie du renfort fibreux correspondant dans l'un des logements ;
- compression isostatique à chaud de l'ensemble pour obtenir un barreau renforcé ;
- débit du barreau renforcé pour constituer une pluralité d'ébauches de bielles (6) ;
- finition de chaque ébauche pour obtenir des bielles renforcées.

3. Bielle (6) pouvant être obtenue par le procédé selon la revendication 1 ou 2, comportant une matrice métallique dans laquelle sont noyées des fibres de renfort s'étendant de part et d'autre d'un axe longitudinal (X) de la bielle, les fibres débouchant sur un chant de la bielle.

## Patentansprüche

1. Verfahren zur Herstellung einer metallenen Pleuelstange (6), die in ihrer Dicke in Längsrichtung mittels einer Faserverstärkung (2) verstärkt ist, wobei das Verfahren die folgenden Schritte umfasst:
- Herstellen eines metallenen Rohlings, der mindestens eine Längsaufnahme (11, 12) umfasst, die an einer Schmalseite des Rohlings mündet,
- Einfügen einer Faserverstärkung (2) in die Aufnahme;
- Verbinden der Faserverstärkung mit dem Rohling durch Metall-Diffusion um die Fasern der Faserverstärkung (2) herum;
- Endbearbeiten des Rohlings, um eine Pleuelstange (6) zu erhalten;
- **dadurch gekennzeichnet, dass** das Einfügen der Faserverstärkung die folgenden Vorgänge umfasst:
- vorheriges Anordnen der Faserverstärkung auf einem Träger in Form eines Winkeleisens;
- Einfügen des mit der entsprechenden Faserverstärkung versehenen Winkeleisens in die Aufnahme.

2. Verfahren zur Herstellung einer metallenen Pleuelstange (6), die in ihrer Dicke in Längsrichtung mittels einer Faserverstärkung (2) verstärkt ist, die sich parallel zu einer Längsrichtung der Pleuelstange erstreckt, wobei das Verfahren die folgenden Schritte umfasst:
- Herstellen eines Metallprofils (1) mit konstantem Querschnitt, das mindestens zwei Längsaufnahmen (11, 12) umfasst;
- Einfügen einer Faserverstärkung (2) in die Aufnahmen, wobei das Einfügen der Faserverstärkung das vorherige Anordnen der Faserverstärkungen auf Trägern in Form eines Winkeleisens und das Einfügen jedes mit einer entsprechenden Faserverstärkung versehenen Winkeleisens in eine der Aufnahmen umfasst;
- isostatisches Heißpressen der Einheit, um einen verstärkten Stab zu erhalten;
- Schneiden des verstärkten Stabes, um eine Vielzahl von Pleuelstangenrohlingen (6) zu bilden;
- Endbearbeiten jedes Rohlings, um verstärkte Pleuelstangen zu erhalten.

3. Pleuelstange (6), die durch das Verfahren nach Anspruch 1 oder 2 erhalten werden kann, umfassend eine Metallmatrix, in die Verstärkungsfasern eingebettet sind, die sich zu beiden Seiten einer Längsachse (X) der Pleuelstange erstrecken, wobei die Fasern an einer Schmalseite der Pleuelstange münden.

## Claims

1. A method of fabricating a metal link rod (6) that is longitudinally reinforced in its thickness by fiber reinforcement (2), the method comprising the following steps:
• making a metal blank having at least one longitudinal housing (11, 12) leading into an edge face of the blank;
• inserting fiber reinforcement (2) into the housing;
• bonding the fiber reinforcement to the blank by metal diffusion around the fibers of the fiber reinforcement (2); and
• finishing the blank to obtain a link rod (6);
the method being **characterized in that** the fiber reinforcement is inserted by means of the following operations:
• previously placing the fiber reinforcement on a support in the form of an angle bar; and
• inserting the angle bar carrying the corresponding fiber reinforcement in the housing.

2. A method of fabricating a metal link rod (6) that is longitudinally reinforced in its thickness by fiber reinforcement (2) extending parallel to a longitudinal direction of the link rod, the method comprising the following steps:
• making a metal section member (1) of constant section and including at least two longitudinal housings (11, 12);
• inserting a respective piece of fiber reinforcement (2) in each of the housings, the insertion of the fiber reinforcement comprising initially placing fiber reinforcement on a support in the form of an angle bar and then inserting each angle bar carrying the corresponding fiber reinforcement in one of the housings;
• applying hot isostatic compression to the assembly in order to obtain a reinforced bar;
• cutting up the reinforced bar in order to make a plurality of link-rod blanks; and
• finishing each blank in order to obtain reinforced link rods.

3. A link rod (6) suitable for being obtained by the method according to claim 1 or claim 2, the link rod comprising a metal matrix having reinforcing fibers embedded therein lying on either side of a longitudinal axis (X) of the link rod, the fibers leading into an edge face of the link rod.
